# EUROPEAN PATENT APPLICATION

(11) **EP 3 428 688 A1**
(43) Date of publication of application: **16.01.2019**
(21) Application number: 18460043.5
(22) Date of filing: 11.07.2018
(51) Int. Cl.: G01S 19/21, H04K 3/00

(54) **SYSTEM FOR DETECTION AND MITIGATION OF SPOOFING ATTACKS IN GPS NAVIGATION SATELITE SYSTEM**

(30) Priority: 12.07.2017 PL 42219517
(71) Applicant: Politechnika Gdanska, 80-233 Gdansk (PL)
(72) Inventor: Magiera, Jaroslaw, 80-297 Banino (PL); Katulski, Ryszard, 80-391 Gdansk (PL)

(57) **Abstract**

System for detection and mitigation of spoofing attacks in GPS navigation satellite system is characterized, according to the invention, in that the preprocessing block (PP) is equipped with m inputs from the antenna array (AA) consisting of **m** antennas (A₁,A_{2,}...... A_{M}), **m** outputs to the phase shift estimation block (PSE), where one of the outputs of preprocessing block (PP) is connected to the signal acquisition block (SA), which is connected to the phase shift estimation block (PSE), which, through the phase shift differences estimation block (PSDE), is connected with the spoofing detection block (SD), where the spoofing detection block (SD) is connected to the threshold setting block (TS) while the threshold setting block (TS) is connected with the signal acquisition block (SA), as well as the phase shift estimation block (PSE) is connected to the weight determination block (WD), while the spoofing detection block (SD) is connected with the weight determination block (WD), which has **m** outputs to the spatial filter block (SF), while the spatial filter block (SF) consists **of m** multiplier blocks (M₁, M₂,...Mₘ) which are connected independently through m inputs with the preprocessing block (PP) and the weight determination block (WD), where all multiplier blocks (M₁, M₂,...Mₘ) are connected to the combiner block (C), which is connected, through the end processing block (EP), to the GPS receiver (GR).

## Description

The invention relates to a system for detection and mitigation of spoofing attacks in GPS navigation satellite system.

GPS spoofing is a type of electronic attack based on transmission of malicious navigation signals which imitate genuine signals arriving to a GPS receiver from navigation satellites. Parameters of imitating signals are specially coordinated to make receiver indicate incorrect information about its position or time.

There are known methods and systems for detecting spoofing attacks in GPS navigation satellite system, in which the detection procedures involve time-domain analysis of received signals' parameters, such as: power, relative delay, shape of correlation function, integrity of parameters within a single signal or integrity of parameters among multiple signals. However, systems in this form may fail to detect spoofing if attack is performed with the use of sophisticated generator of imitating signals. Moreover, such systems are used solely for spoofing detection an do not provide the means to mitigate such attack. There are also known methods and systems for GPS spoofing mitigation basing either on rejection of information contained in imitating signals or basing on time-domain subtraction of imitating signal replicas from overall received signal.

The aim of this invention is to develop a system which can be used both for GPS spoofing detection and mitigation in receiver, assuming that all imitating signals are transmitted from a single antenna. Principle of operation of developed system is based on spatial analysis and spatial processing of GPS signals received through multiple antennas comprising an antenna array.

According to the invention, the system for detection and mitigation of spoofing attacks in Global Navigation Satellite Systems may be described as follows: it is equipped with a preprocessing block which has **m** inputs from an antenna array consisting of **m** antennas, **m** outputs to a phase shift estimation block and **m** outputs to a spatial filter block, where one of the outputs of the preprocessing block is connected to a signal acquisition block. The signal acquisition block is connected with the phase shift estimation block which is connected with a spoofing detection block through a phase shift differences estimation block.

A threshold setting block is connected to the spoofing detection block while the signal acquisition block is connected to the threshold setting block.

The spoofing detection block is connected to a weight determination block, which is connected with the phase shift estimation block, which is connected with the phase shift differences estimation block.

The weight determination block has **m** outputs connected to the spatial filter block. The spatial filter block consists of **m** multiplier blocks which are connected independently through **m** inputs with the preprocessing block and the weight determination block. All multiplier blocks are connected to a combiner block which is connected to a GPS receiver through an end processing block.

The use of this invention provides a method of effective protection from spoofing attacks in GPS navigation satellite system.

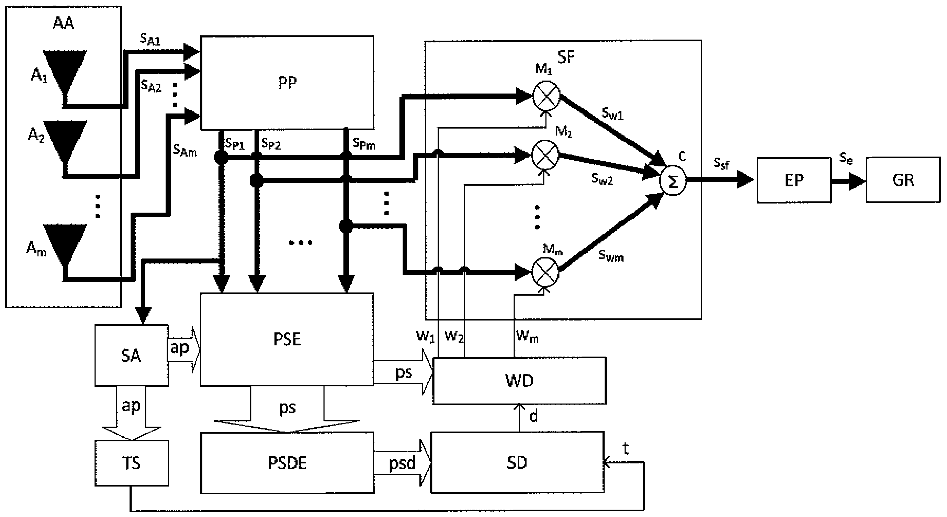

The detailed description of the invention is provided in the following implementation example and in the figure which presents the block scheme of the system.

### Example

GPS signals are received through **m** antennas comprising an antenna array AA. Output signals A₁,A₂,..... A_{M} from particular antennas are passed to inputs S_{A2},...,S_{Am} of a preprocessing block PP. In the preprocessing block PP signals are filtered, amplified and shifted to lower frequency band. Processed signal from the first output S_{P1} of the preprocessing block PP is passed to GPS signal acquisition block SA. In GPS signal acquisition block SA, received GPS signals are detected and their parameters, which are carrier frequency shift and pseudorandom code phase shift, are estimated. Carrier frequency is the center frequency of received GPS signal, while pseudorandom code phase shift represents the signal timing offset relative to local clock of 1 ms period.

Signals Sp₁, Sp₂....Spₘ processed in the preprocessing block PP are passed to inputs of a phase shift estimation block PSE. The phase shift estimation block PSE calculates, for each of received GPS signals, carrier phase shifts between copies of these signals received through selected pairs of antennas in the antenna array AA.

First information signal ps, carrying values of all phase shifts calculated in phase shift estimation block PSE, is passed to a phase shift differences estimation block PSDE and to a weight determination block WD. The phase shift differences estimation block PSDE calculates all possible phase shift differences between different GPS signals received through respective pairs of antennas. Second information signal **psd**, carrying values of phase shift differences, is passed to a spoofing detection block SD in which these values are compared with detection threshold value. This threshold is set in a threshold setting block TS and passed, in the third information signal **t,** to the spoofing detection block SD. Detection threshold value is set based upon acquisition parameters contained in the fourth information signal ap from the signal acquisition block SA, while the fourth information signal ap is passed also to the phase shift estimation block PSE.

The spoofing detection block SD detects spoofing presence when all values of phase shift differences are smaller than defined threshold, which means that received GPS signals arrive from the same direction. Information about spoofing detection is passed to the weight determination block WD in the fifth information signal **d.**

The weight determination block WD determines values of m weight coefficients basing on phase shifts of received GPS signals. Weights values are evaluated which provide high attenuation in direction of arrival of imitating GPS signals. When spoofing is not detected, value of the first weight is set to 1, while values of all other weights are zeroed, which corresponds to receiving signals only through the first antenna A₁ in the antenna array AA.

In a spatial filter block SF processed signals S_{P1}, S_{P2}.....S_{Pm} from the preprocessing block PP are multiplied in multiplier blocks Mi, M₂,...Mₘ with weight signals w₁, w₂......wₘ passed from the weight determination block WD, then are summed in a combiner block C and, as spatial filter output signal Sₛf, passed to an end processing block EP which performs frequency upconversion to GPS band as well as frequency-domain filtering.

End signal S_{c} from the end processing block EP output, free of spoofing signal components, is passed to the input of a GPS receiver GR, which results in secure operation of GPS receiver.

## Claims

1. System for detection and mitigation of spoofing attacks in GPS navigation satellite system, **characterized in that** the preprocessing block (PP) is equipped with **m** inputs from the antenna array (AA) consisting of **m** antennas (A₁,A₂,..... A_{M}), **m** outputs to the phase shift estimation block (PSE), where one of the outputs of preprocessing block (PP) is connected to the signal acquisition block (SA), which is connected to the phase shift estimation block (PSE), which, through the phase shift differences estimation block (PSDE), is connected with the spoofing detection block (SD), where the spoofing detection block (SD) is connected to the threshold setting block (TS) while the threshold setting block (TS) is connected with the signal acquisition block (SA), as well as the phase shift estimation block (PSE) is connected to the weight determination block (WD), while the spoofing detection block (SD) is connected with the weight determination block (WD), which has **m** outputs to the spatial filter block (SF), while the spatial filter block (SF) consists of m multiplier blocks (M₁, M₂,...Mₘ) which are connected independently through **m** inputs with the preprocessing block (PP) and the weight determination block (WD), where all multiplier blocks (M₁, M₂,...Mₘ) are connected to the combiner block (C), which is connected, through the end processing block (EP), to the GPS receiver (GR).
